Europäisches Patentamt

European Patent Office

Office européen des brevets

(19)

(11) **EP 0 362 747 B1**

(12) **EUROPEAN PATENT SPECIFICATION**

(45) Date of publication and mention
of the grant of the patent:
**27.12.1996 Bulletin 1996/52**

(51) Int Cl.$^6$: **H04N 9/78**

(21) Application number: **89118182.8**

(22) Date of filing: **30.09.1989**

(54) **Circuitry for comb filtering PAL and NTSC video signals**

Schaltungsanordnung zur Kammfilterung von PAL- und NTSC-Videosignalen

Circuiterie de filtrage en peigne de signaux vidéo PAL et NTSC

(84) Designated Contracting States:
**AT DE ES FR GB IT SE**

(30) Priority: **04.10.1988 DE 3833692**
**24.10.1988 US 261522**

(43) Date of publication of application:
**11.04.1990 Bulletin 1990/15**

(73) Proprietor: **RCA Thomson Licensing Corporation**
**Princeton New Jersey 08540 (US)**

(72) Inventors:
* **Schweer, Rainer**
**D-7808 Waldkirch (DE)**
* **Gillies, David**
**F-6700 Strassburg (FR)**
* **Perlman, Stuart Stanley**
**Princeton New Jersey (US)**

(74) Representative:
**Hartnack, Wolfgang, Dipl.-Ing. et al**
**Deutsche Thomson-Brandt GmbH**
**Licensing & Intellectual Property,**
**Göttinger Chaussee 76**
**30453 Hannover (DE)**

(56) References cited:
**EP-A- 0 023 555          BE-A- 882 781**
**US-A- 4 178 609**

* **PATENT ABSTRACTS OF JAPAN vol. 12, no. 452
(E-687)(3299) 28 November 1988 & JP-A-63 180
287**
* **PATENT ABSTRACTS OF JAPAN vol. 9, no. 136
(E-320)(1859) 12 June 1985 & JP-A-60 019 387**
* **PATENT ABSTRACTS OF JAPAN vol. 8, no. 111
(E-246)(1548) 24 May 1984 & JP-A-59 025 491**

## Description

This invention is related to comb filters for processing video signals. Such a comb filter is described US-A-4 178 609 in combination with an NTSC composite colour video signal.

For combining video signals from different lines for achieving the comb filter operation only a delay of one video line is used. The problem underlying this prior art comb filter is to reduce the effect caused by non-correlated lines in comb filtering. Therefore, a switch switching between the video signal of a preceding line and a following line is operated in dependence on the picture content of the three lines involved. That means this operation is not at regular times but depends only on the momentary correlation between two lines.

PAL signals on the other hand have a chrominance subcarrier which exhibits a 180° phase change every two horizontal line periods. Therefore, typical intraframe PAL comb filters combine video signals which are displaced in time by two horizontal line intervals and thus make use of a delay amounting to two lines. The PAL comb filter function is basically the same as for the NTSC comb filter; however, since the signals that are combined are spatially displaced by two lines, the vertical resolution of the PAL luminance component is significantly impaired, and tends towards not being acceptable.

Yoshimitsu Nakajima et al in an article entitled "Improvement of Picture Quality For NTSC And PAL Systems By Digital Signal Processing," IEEE Transactions on Consumer Electronics, Vol. CE-31, No. 4, Nov. 1985, pp. 642-654 describe adaptive comb filters which combine samples from three successive lines of video signal. In this system, the NTSC embodiment combines samples which are vertically aligned, similar to the aforedescribed typical NTSC and PAL comb filters. The PAL embodiment however combines diagonally aligned samples from adjacent lines. This tends to preserve the vertical resolution of the luminance component, reduces memory requirements for delaying the video signals but tends to have an adverse affect on images containing vertical lines.

Published German Application DE 3007520 A1 shows a comb filter apparatus for PAL signals including an intraframe comb filter. The intraframe comb filter includes a one line delay element for delaying alternate samples of the video signal from successive lines of signal. The delayed samples are coupled to one input of a combining circuit and intervening samples from the current line are coupled to a second input of the combining circuit. Since the combined signals correspond to alternate samples on alternate lines, the intraframe filter function corresponds to a diagonal rather than a vertical comb filter. Further since the apparatus operates on alternate samples, there is a loss in horizontal resolution.

Richard C. Spiero in U.S. Patent US-A-4,480,265 describes a circuit for comb filtering separated PAL chrominance signals by combining signals from adjacent video lines. In this system one of the signals to be combined is first applied to a phase inverter which inverts the phase of the (R-Y) component of the chrominance signal before combining. The line of chrominance which undergoes phase inversion has its components phase aligned with the chrominance components of adjacent lines. The phase inverted line and an adjacent line is additively combined to develop a noise reduced chrominance signal. This system is limited to comb filtering chrominance signal and cannot be utilized to separate the luminance and chrominance components from composite PAL video signals.

The problem of the present invention is to provide a comb filter for processing, at least PAL-video signals in which for combining different liens only an overall delay of one line is needed.

This problem is solved by the subject-matter claimed in claim 1. Preferred embodiments of the invention are claimed in the dependent claims.

### Brief Description of the Drawings

FIGUREs 1A, 1B, and 1C are pictoral diagrams representing a portion of a field of chrominance components of video signals sampled at four times the chrominance subcarrier frequency, which diagrams are useful in understanding the principle of the invention.

FIGUREs 2, 3 and 9 are block diagrams of alternative comb filter circuits embodying the invention.

FIGUREs 4-8 are block diagrams or schematics of alternative circuits which may be implemented for element 72 of FIGURE 3.

FIGURE 10 is a block diagram of a further embodiment of a comb filter arrangement for taking into account vertical signal components.

FIGURE 11 is a table of samples provided at various signal points in the arrangement of FIGURE 10.

The invention may be practiced in either the analog, e.g., sampled data, or digital signal processing domain, however, it will be described in a digital signal processing environment. As such, except for clock lines and the analog signal input, the interconnecting lines are assumed to be multibit parallel connections.

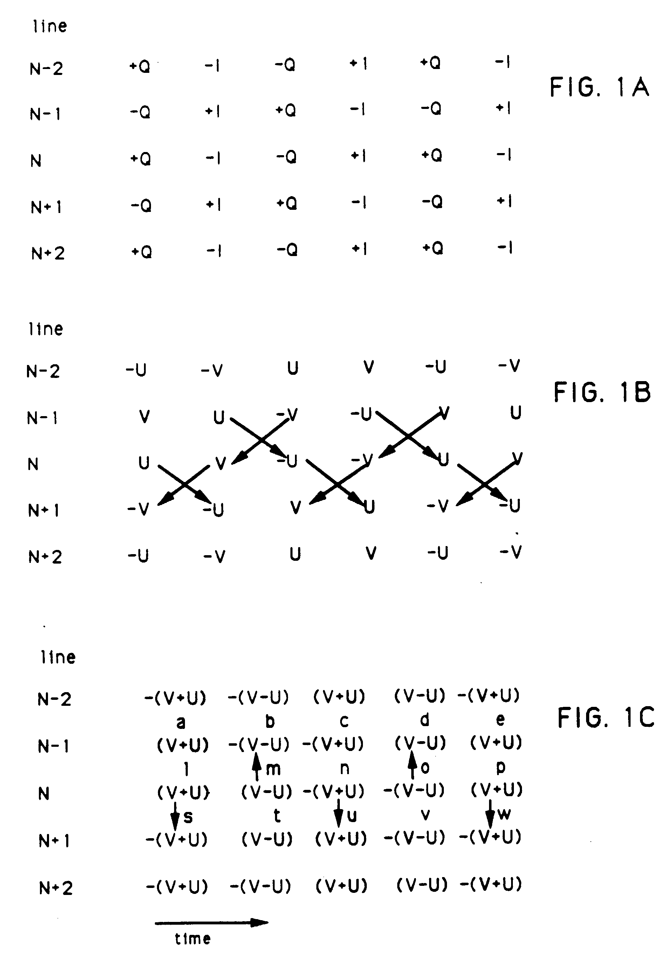

Referring to FIGURE 1A, a matrix of signal samples are illustrated which are intended to represent successive chrominance components from portions of successive lines of an NTSC video signal sampled at four times the color subcarrier frequency. The signal is presumed to be sampled in phase with one of the axes of the quadrature modulated color difference signal components. Samples designated ±I represent the in phase component and samples designated ±Q represent the quadrature phase component. The ± signs represent the sampling phase relative to the subcarrier and not necessarily the sample polarity. If the sampled video signal is a composite video signal, the samples at each location will include a luminance, Y contribution, e.g., Y+Q, Y-I, Y-Q, Y+I, Y+Q etc. however, the Y terms have been excluded in the drawing to avoid confusion. In FIGURE 1A, the in phase and quadrature samples I,Q may represent the (R-Y) and (B-Y) color difference signals or the conventional I and Q color difference signals. The particular sample set is determined by the sampling phase. It is seen from FIGURE 1A that vertically adjacent samples represent like chrominance components. This vertical alignment facilitates comb filtering, i.e., additively combining vertically adjacent samples cancels the chrominance and provides twice luminance while subtractive combining vertically adjacent samples cancels luminance contributions and provides twice chrominance (assuming substantially redundant line-to-line image content). Any line may be combined with either adjacent line to produce a comb filter signal.

FIGURE 1B illustrates a matrix of signal samples which are intended to represent successive chrominance components from portions of successive lines of a PAL video signal (e.g., PAL/M) sampled at four times the subcarrier frequency. As in FIGURE 1A contributions of the luminance component (for composite signal) have been excluded. The signal is presumed to be sampled in phase with one of the axes of the quadrature modulated color difference signal components U,V. By convention component U represents the (B-Y) color difference signal and component V represents the (R-Y) color difference signal. In the PAL signal the phase of the V component is shifted 90° line-to-line relative to the U component. The result is that vertically adjacent samples represent alternate components. Consequently vertically adjacent samples cannot be combined to produce comb filterd signals representing a particular component. Note however that the samples may be combined diagonally, as indicated by the arrows, to develope comb filtered components. However, errors will occur for horizontal transitions which can occur in the luminance component, resulting in significant cross components in the comb filtered chrominance components.

FIGURE 1C shows the sample distribution resulting from sampling the video signal at 45 degrees off the U or V axes. As in FIGUREs 1A and 1B the luminance contributions, if present in the input video signal, have been excluded from the diagram. It is seen from FIGURE 1C that vertically adjacent samples represent like chrominance components. Alternate samples between any pair of lines represent samples of opposite subcarrier phase and may be combined to separate the luminance and chrominance components of composite video signal. The pairs of samples which may be combined for this purpose are indicated by the arrows in the figure. To produce separated luminance and chrominance components representing line N of the video signal, the samples along line N are alternately combined with vertically adjacent samples from line N+1 and line N-1, i.e., sample (l,s) (m,b) (n,u) (o,d) and (p,w). Similarly, to produce separated components representing line N-1, the samples along line N-1 are alternately combined with samples from line N-2 and line N.

Alternatively, if the input video signal contains only a chrominance component, alternate samples of like subcarrier phase may be additively combined to produce noise reduced comb filterd chrominance signals, i.e., samples (l,a) (m, t) (n,c) (o,n) and (p,e). In this example it is necessary to concurrently provide samples from three adjacent lines. Comb filtered chrominance samples may be produced from signals from only two adjacent lines if alternate samples from one of the lines have their polarity reversed. In this instance, consider developing comb filtered chrominance samples representing line N by combining samples from lines N and N+1. In line N+1 samples s,u and w are inverted to produce samples -,s -u and -w. Then samples (l,-s) (m,t) (n,-u) (o,v) and (p-w) are combined to produce the comb filtered chrominance component.

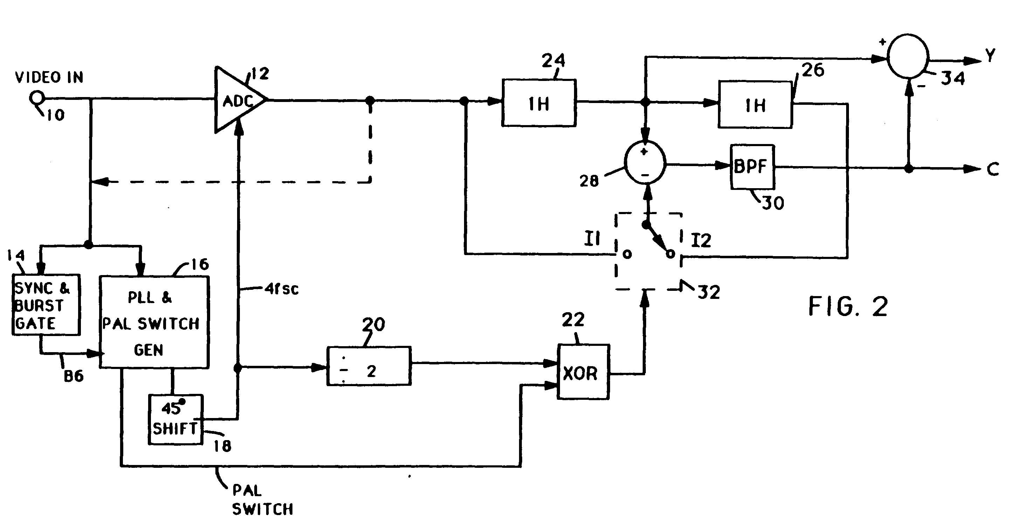

FIGURE 2 illustrates circuitry embodying the basic invention. Input video signal which may be sourced from a conventional television tuner is applied to terminal 10. This signal is coupled to the analog input connection of an analog-to-digital converter (ADC) 12, and to the phase-locked-loop (PLL) circuitry 16 and sync separator 14. The sync separator develops a burst gate signal BG which is coupled to the PLL circuitry 16. PLL circuitry 16 is responsive to the burst component of the video signal to develop a clock signal having a frequency of four times the chrominance subcarrier frequency $f_{sc}$, phase locked to e.g. the U axis of the chrominance component. This clock signal is coupled to a phase shifter 18, which shifts the phase of the clock signal to substantially 45° relative to the U or V axis. The phase shifted clock signal is applied to the sampling clock input terminal of ADC 12 and a divide-by-two frequency divider 20. The PLL 16 also develops a PAL switch signal which represents the relative phase of the V chrominance component. Circuits 14, 16 and 18 may be of conventional design. Circuit 18 may be incorporated in the PLL 16. In an alternative arrangement, the sync separator 14 and PLL 16 may be designed to process digital samples in which case the input signal to these circuits is derived from the output signal from ADC 12 (indicated by the broken line connection).

The PAL switch signal and the clock signal from divider 20 are coupled to respective input terminals of an exclusive OR circuit 22 which produces a two times $f_{sc}$ clock signal of opposite phase on alternate lines. The two times $f_{sc}$ clock signal is coupled to the control input terminal of a switch circuit 32, to alternately couple samples applied to its two signal inputs I1 and I2 to the subtracter 28.

The video signal at terminal 10 is sampled and converted to binary form by ADC 12 to produce samples as illustrated in FIGURE 1C. These samples are coupled to a one horizontal interval delay element 24 and to the input terminal I1 of switch 32. The delayed signal from delay element 24 is coupled to a second one horizontal interval delay element 26, the output of which is coupled to the input terminal I2 of switch 32. If the signal provided by delay element 24 corresponds to line N (FIGURE 1C), then the signals applied to the inputs I1 and I2 of switch 32 correspond to lines N+1 and N-1 respectively.

Signal representing line N from delay element 24 is coupled to the minuend input terminal of subtracter 28 and output signal from switch 32 is coupled to the subtrahend input terminal of subtracter 28. Switch 32 is conditioned to couple alternate samples from line N+1 and N-1 to subtracter 28, e.g., the sequence of samples s, b, u, d, w. The chrominance component of the samples are constructively combined in the subtracter 28 to produce a comb filtered chrominance signal. If the input signal includes a luminance component it is substantially cancelled by the subtractive function. Output signal provided by subtracter 28 is coupled to a bandpass filter 30 designed to have a passband encompassing the frequency spectrum normally occupied by the chrominance signal. If the input video signal includes a luminance component, a separated luminance signal is provided by subtracting the bandpass and comb filtered signal from element 30, from delayed composite video signal from delay element 24 in the subtracter 34.

Delay element 26 provides samples representing line N-1 when comb filtered signal representing line N is being provided by subtracter 28 (and 34). With reference to FIGURE 1C it is seen that only every other sample from line N-1 is utilized. Therefore delay element 26 may be realized with a half-H delay line, e.g., a memory element having half the storage capacity as delay element 24 and cycled or clocked at one-half the sample rate.

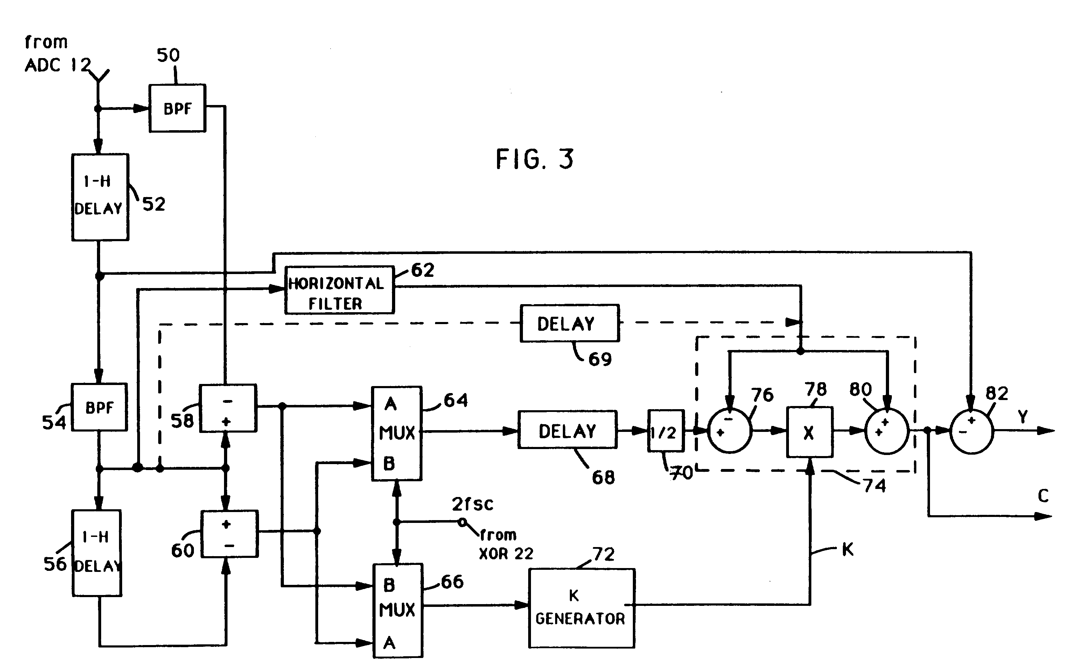

FIGURE 3 illustrates an adaptive comb filter of the type shown in FIGURE 2, including additional circuitry to compensate for comb filtered signal artifacts introduced by vertical transitions of the video signal. In FIGURE 3, signal from ADC 12 is coupled to a one-horizontal-interval-delay element 52 and a bandpass filter 50. Output signal from delay element 52 is coupled via a bandpass filter 54 to a second one-horizontal-interval delay element 56. Bandpass filters 50 and 54 have passbands arranged to encompass the frequency spectrum normally occupied by the chrominance component of the input video signal.

Output signal from bandpass filter 54 is coupled to the minuend input connections of subtracter circuits 58 and 60. Output signals from delay element 56 and bandpass filter 50 are respectively coupled to the subtrahend input connections of subtracter circuits 60 and 58. The three signals coupled to subtracters 58 and 60 are all bandpass filtered. If the signal coupled to the minuend input connection of subtracter circuits 58 and 60 corresponds to line N (FIGURE 1C) then the signals coupled to the subtrahend input connections of subtracters 58 and 60 respectively correspond to lines N+1 and N-1.

Subtracter 58 produces samples corresponding to the differences between successive vertically adjacent samples from lines N and N+1. Subtracter 60 produces samples corresponding to the differences between successive vertically adjacent samples from lines N and N-1. The difference samples from subtracter circuits 58 and 60 are coupled to respective signal input terminals of a two-to-one multiplexer 64. Multiplexer 64 is conditioned by the two-times $f_{sc}$ signal from exclusive OR circuit 22 (FIGURE 2) to alternately couple samples from subtracter circuits 58 and 60 to a delay element 68. The sequence of samples provided by multiplexer 64 corresponds to the sequence of samples provided by subtracter circuit 28 in FIGURE 2 and thus represents a comb filtered chrominance component corresponding to line N.

Delay element 68 provides a compensating delay to the comb filtered chrominance signal, to accommodate for processing delays in the remainder of the circuitry to be described. The comb filtered chrominance signal, since it is the algebraic sum of two signals is of twice amplitude. Therefore the comb filtered signal from delay element 68 is coupled to an attenuator 70 which divides the signal amplitude by two. The divided signal from attenuator 70 is applied to one input terminal of a switching circuit 74. An alternative chrominance signal is coupled to a second input terminal of switching circuit 74. The alternative chrominance signal may be derived by horizontally filtering signal provided by bandpass filter 54 in filter 62. In this instance, horizontal filter 62 may provide narrowband chrominance signal samples corresponding to the comb filtered pixel available from attenuator 70. An exemplary horizontal filter function H is represented by the equation:

$$H = -1 + 2Z^{-p} - Z^{-2p}$$

where Z is the conventional Zee transform variable and the superscript p represents a one sample delay period. Alternatively, the alternative chrominance signal may simply be the bandpass filtered signal available from filter 54, coupled to the switching circuit 74 via compensating delay element 69. For example, if the comb filtered signal corresponds to combined samples n-u (for line N), the alternative chrominance sample corresponds to sanple n (FIGURE 1C). It will be appreciated by those skilled in the art of video signal processing, that other alternate chrominance signals may be derived from the input video signal and applied to switching circuit 74.

Switching circuit 74 is conditioned by a switching signal K to couple either the comb filtered chrominance signal or the alternative chrominance signal or a combination of both to its output terminal to provide a chrominance component signal. The chrominance component signal from circuit 74 may be subtracted (in subtracter circuit 82) from delayed composite video signal from delay element 52 to produce a luminance component signal.

The exemplary switching circuit 74 includes the cascade connection of a subtracter 76, a multiplier 78 and an adder 80. The comb filtered chrominance signal from attenuator 70 is coupled to one input of the subtracter 76. The alternative chrominance signal is coupled to a second input of subtracter 76 and to the adder 80. The control signal K nominally having values between 0-1 inclusive, is applied to the control input of the multiplier. The output produced by circuit 74 corresponds to (K)S1+(1-K)S2 where S1 and S2 correspond to the comb filtered and alternative chrominance signals respectively.

The control signal K is developed as follows. Refer to FIGURE 1C and consider a comb filtered signal corresponding to sample n line N. The comb filtered sample representing pixel n is a combination of samples n and u. If a vertical transition exists between lines N and N+1 there is a high probability that the combined sample will be erroneous, i.e., introduce an artifact in the displayed image. If a transition exists at pixel n between lines N and N+1, it is highly probable that the transition extends to the area between pixels m and t and pixels o and v. The existence of such transitions can therefore be detected by measuring the difference between like phase samples m,t and o,v. These samples are not utilized in developing the comb filtered sample representing pixel n, but are utilized in determining if the comb filtered sample may be erroneous.

Referring again to FIGURE 3, sample differences from subtracter circuits 58 and 60 are coupled to respective signal input terminals of a further multiplexer 66. Multiplexer 66 is conditioned by the two-times $f_{sc}$ clock signal from exclusive OR circuit 22 to provide a sequence of sample differences representing the alternate sample differences not passed by multiplexer 64. That is when comb filtered samples are developed representing line N, the sequence of sample differences passed by multiplexer 66 are derived from samples (l,a)(m,t)(n,c)(o,v) and (p,c). The samples provided by multiplexer 66 are coupled to the K control signal generator 72 which develops a K control signal representing the relative goodness of the current comb filtered signal. For example, if a vertical transition is detected or not detected, generator 72 may produce control values of zero and one respectively.

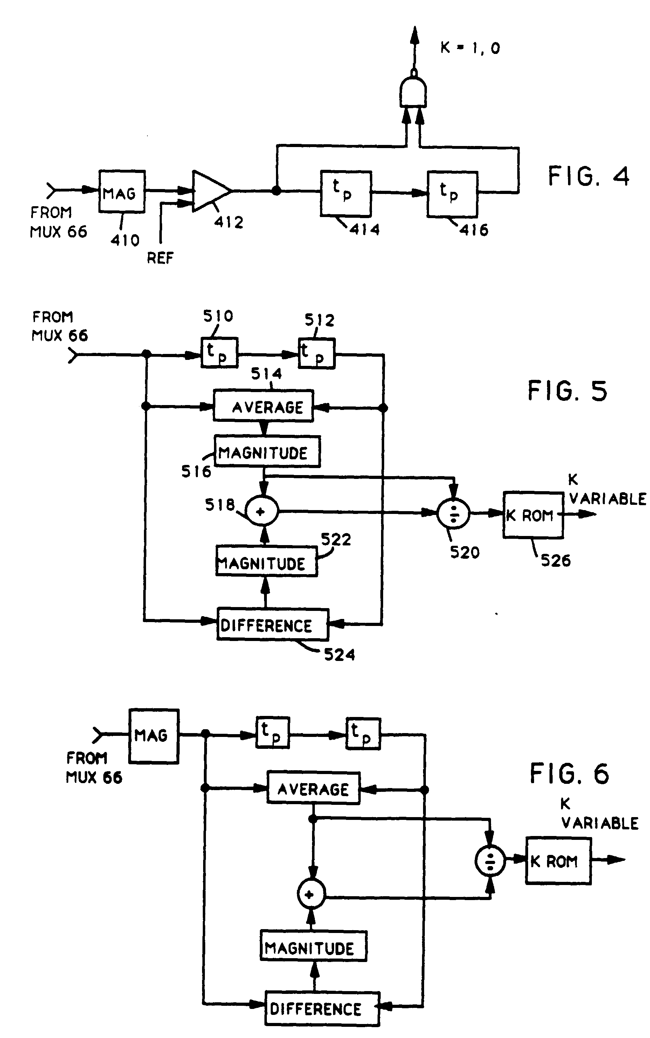

FIGURE 4 is a circuit diagram for a control signal generator 72 which develops K control signals having one and zero values. In this circuitry, the difference samples from multiplexer 66 are coupled to circuit element 410 which provides the magnitude of the difference samples. The magnitude samples are compared to a reference value REF in a comparator 412 which provides logic one and zero values for the magnitude samples being greater and lesser than the reference value respectively. The reference value is selected to be at least equal to the nominal expected noise value to preclude false detection of transitions. The reference value may be increased to a value representing vertical transitions which do not produce unacceptable comb filtered signals, which value will be determined subjectively for each particular video signal processing system.

The one/zero values from comparator 412 are coupled to one input terminal of a NAND gate 418, and to the input terminal of the cascade connected delay elements 414 and 416. The output of delay element 416 is coupled to a second input of the NAND gate 418. The delay elements 414 and 416 each provide a sample delay of one sample period. If the comb filtered sample currently provided by attenuator 70 corresponds to the difference between samples (n,u) then the one/zero values at the input to delay element 414 and output of delay element 416 correspond to differences between samples (o,v) and (m,t) respectively. If a logic "one" is present at both inputs to the NAND gate 418, NAND gate 418 provides a zero value and the alternate chrominance sample is provided by switching circuit 74. Otherwise, NAND gate 418 provides a "one" value and the comb filtered signal is provided by circuit 74.

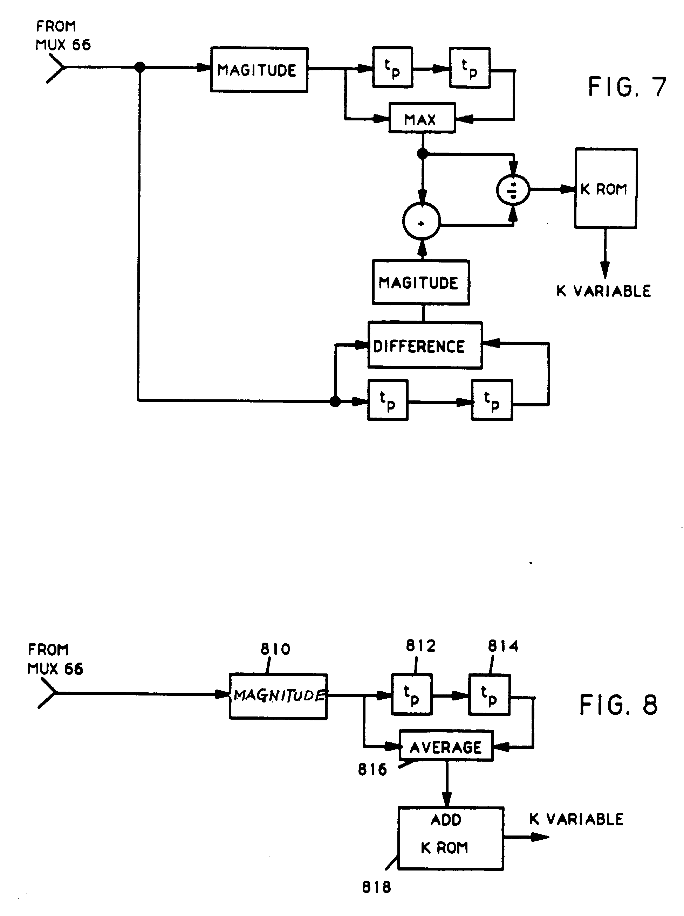

FIGURES 5-8 show alternative embodiments of the K signal generator 72, each of which provides a variable control signal, K, having values from zero to one. Refer first to FIGURE 8. In this embodiment, sample differences from multiplexer 66 are coupled to a magnitude circuit 810 which provides the magnitudes of the differences. The magnitude values are coupled to cascade connected delay elements 812 and 814 and to one input connection of a sample averaging circuit 816. The output of delay element 814 is coupled to a second input connection of the averaging circuit 816 which provides the average of samples applied to its input connections e.g., the average of the magnitudes of the differences of samples (m,t) and (o,u). The averages provided by circuit 816 are applied to logic circuitry 818 which produces the K control signal. Logic circuitry 818 may conveniently be realized with a memory device, for example, a read only memory (ROM). The average values are coupled as address codes to the ROM which is programmed to produce K values associated with the average values. For example the ROM may be programmed to provide the reciprocal of the average values. Alternatively, the ROM may be programmed to produce a limited number of K values associated with predetermined ranges of the average values. For example, if the average values are represented by seven bit samples having values from zero to 127 the ROM may be programmed to provide K values corresponding to 1, 7/8, 6/8, 5/8, 3/8, 2/8, 1/8 and 0 for ranges of average values of (0-15), (16-31), (32-47), (48-63), (64-79), (80-95), (96-111) and (112-127) respectively.

FIGURES 5, 6 and 7 are alternative circuits which provide K values related to the ratio of horizontal differences $H_o$ to vertical differences $V_D$ of the form $V_D/(V_D+H_D)$. The values provided by multiplexer 66 are vertical differences.

Horizontal differences are derived, for example, by taking the differences between vertical differences.

The FIGURE 5 circuit will be described in detail. The operation of the FIGURES 6 and 7 circuitry is similar and will be readily understood with knowledge of operation of the FIGURE 5 circuit.

In FIGURE 5, the difference samples from multiplexer 66 and coupled to the cascade connected one-sample-interval delay elements 510 and 512, to a signal averager 514 and a signal differencing circuit 524. Output samples from the delay element 512 are coupled to respective second input connections of the signal averager 514 and the signal differencing circuit 524. Averager 514 provides the average value, $V_D$, of two difference samples (e.g., (n-t) and (o-v)) and differencing circuit 524 provides the difference, $H_D$, between the same two difference samples. The average values $V_D$ are applied to a magnitude detector 516 which provides the absolute value $|V_D|$ of the average value. The differences $H_D$ provided by the differencing circuit 524 are coupled to a magnitude detector 522 which provides the absolute value $|H_D|$ of the difference values. The values $|H_D|$ and $|V_D|$ are summed in adder circuit 518 to form the signal $|H_D|+|V_D|$. The value $|V_D|$ from detector 516 is then divided by the value $|H_D|+|V_D|$ in divider 520, producing the signal sample $|V_D|/(|H_D|+|V_D|)$ which is constrained to have values between zero and one inclusive. The signal samples from the divider 520 are coupled as address codes to a ROM 526 which is programmed to provide the appropriate K value for respective address values. Note that the FIGURE 5 circuitry may be slightly rearranged to have the divider 520 produce the ratios $|H_D|/(|H_D|+|V_D|)$. In this instance the ROM 526 will be appropriately programmed to accommodate these address values. Note also that in either instance the function of the ROM 526 may be provided with alternative logic circuitry.

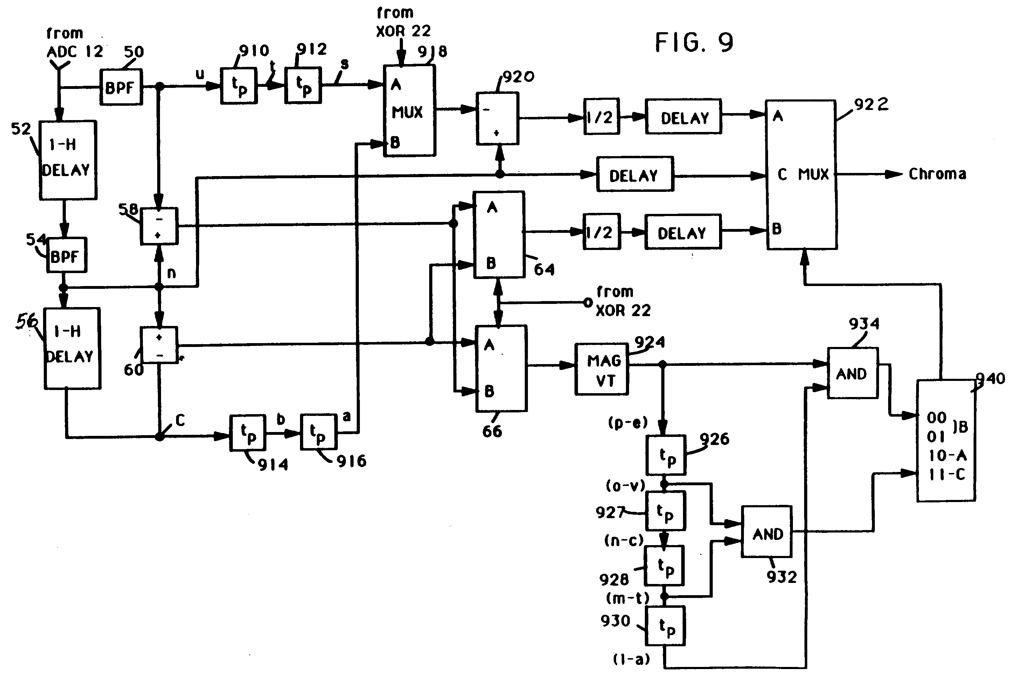

FIGURE 9 is an alternative adaptive comb filter circuit which switches between line alternating comb filtered output and various other substitute signals. The comb filtered chrominance signal produced by the FIGURE 2 circuitry is an example of line alternating comb filtered signal. In FIGURE 9, circuit elements designated by like numerals as elements in FIGURE 3 are similar and perform like functions. As such, multiplexer 64 produces a line alternating comb filtered chrominance signal and multiplexer 66 produces a sequence of line difference samples, which difference samples do not contribute to the comb filtered signal per se.

Refer to FIGURE 1C and consider a comb filtered signal representing line N pixel n. A line alternating comb filter combines samples n and u. If there is a vertical transition between lines N and N+1, the comb filtered sample will probably be in error. If a vertical transition exists between lines N and N+1, it is highly unlikely that a vertical transition will concurrently occur between lines N and N-1. Therefore, it may be more advantageous to combine sample n with a sample from line N-1, for example sample a or sample e or an average of both. Note samples a and e are sampled at the same subcarrier phase as sample u. The circuitry of FIGURE 9 is arranged to substitute a comb filtered sample, e.g., n-a, or sample n for the line alternating comb filtered sample e.g., n-u, if a probable error exists in the line alternating comb filtered sample.

In FIGURE 9, signal from the bandpass filter 50 is coupled to delay elements 910 and 912 to concurrently provide samples u, t and s (FIGURE 1C). Signal from delay element 56 is coupled to delay elements 914 and 916 to concurrently provide samples c, b and a (FIGURE 1C). The delay elements 912 and 916 are coupled to respective input terminals of a multiplexer 918 which is conditioned by the two times $f_{sc}$ signal from exclusive OR circuit 22 to pass a sample from line N-1 when the multiplexer 64 is passing a sample representing the difference between lines N and N+1 and vice versa. The output of multiplexer 918 is coupled to the subtrahend input of subtracter 920. The minuend input of the subtracter 920 is coupled to the output of the bandpass filter 54. The subtracter 920 provides the difference e.g., n-a concurrently with multiplexer 64 providing the difference n-u. Output samples from the subtracter 920, multiplexer 64 and bandpass filter 54 are coupled to respective signal input terminals A, B and C of a multiplexer 922. Multiplexer 922 is conditioned by a control circuit 940 to pass one of the signals available at its A, B and C input connections as a chrominance signal chroma. The chrominance signal may thereafter be combined with composite video signal to produce a luminance component as in FIGURE 3. Note, compensating delays are provided in each of the input signal paths to the multiplexer 922 to accommodate the processing delay of the multiplexer 922 control signal generating circuitry.

Control signals for the multiplexer 922 are developed from the alternate difference samples provided by multiplexer 66. In the exemplary circuitry shown, sample differences from multiplexer 66 are coupled to circuitry 924 which provides logic one values for difference samples having a magnitude which exceed a predetermined threshold value and provides logic zero values otherwise. The logic one/zero values are coupled to the cascade connected delay elements 926-930. Assuming that the current signals available at multiplexer 922 correspond to line N sample n, the one/zero values representing the alternate difference samples from multiplexer 66 are indicated adjacent the output connections of delay elements 926-930. The one/zero values from delay elements 926 and 928, representing difference values disposed on either side of the current line alternating comb filter sample, are applied to respective input connections of an AND gate 932. AND gate 932 provides a logic one output value only when both of its input values are a logic 1 and provides a logic zero value otherwise. If AND gate 932 provides a logic one value it is probable that the line alternating comb filtered sample from multiplexer 64 is in error.

The one/zero values from circuit 924 and delay element 930 are coupled to respective input connections of an AND gate 934. The values coupled to AND gate 934 represent differences disposed on either side of the current line alternating comb filter sample removed two sample intervals from the current sample and derived from the current line (N) and the adjacent line (N-1) which is not contributing to the current line alternating comb filter sample. AND gate 934 provides a logic one output value when a vertical transition exists between the current line and the adjacent line not contributing to the current line alternating comb filter sample.

The output logic value from AND gates 932 and 934 are applied to the control logic circuitry 940 which generates control signals for multiplexer 922. If AND gate 932 provides a logic 0 value, control circuit 940 conditions multiplexer 922 to pass the sample available from multiplexer 64. If both of the AND gates 932 and 934 provide logic one values, indicating transitions between the current line and both adjacent lines, control circuitry 940 conditions multiplexer 922 to pass the sample available from the bandpass filter 54. Finally, if AND gate 932 provides a logic one and AND gate 934 provides a logic zero, indicating a vertical transition between e.g., lines N and N+1 but no transition between lines N and N-1, then control circuit 940 conditions the multiplexer 922 to pass the alternate difference sample (e.g., n-a) provided by subtracter 926.

The circuitry of FIGURE 9 can be slightly rearranged to generate a further substitute signal (alternative to the sample n-a). Consider the comb filtered sample (n-u) representing line N sample n. The sample c, immediately above sample n is of like sampling phase. Both samples n and c have been derived via bandpass filter 54 and thus are primarily chrominance samples. Thus if the samples n and c are additively combined the sum thereof will be primarily a chrominance sample. These substitute samples may be produced in the FIGURE 9 arrangement by substituting an adder circuit for subtracter 920 and coupling the A and B input connections of multiplexer 918 to the output connections of delay element 56 and bandpass filter 50 respectively (i.e., eliminating delay elements 910-916). The remainder of the circuitry of FIGURE 9 can remain intact. The substitute samples, e.g., (n+c), have the advantage of being derived from spatially adjacent samples, but the disadvantage of including high frequency luminance. Conversely the substitute samples, e.g., (n-a), contain substantially no luminance components but are derived from fairly widely separated samples and may include errors due to horizontal transitions.

Both alternatives of the FIGURE 9 circuitry may be combined in a single system with appropriate detection circuitry to select the substitute sample least likely to introduce artifacts in the reproduced image.

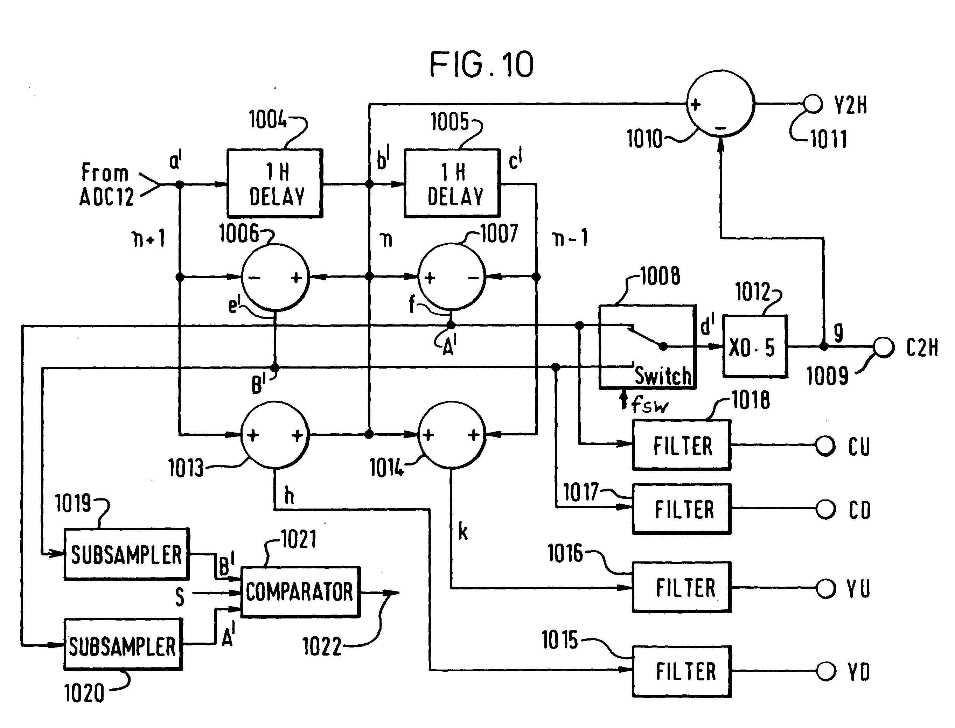

FIGURE 10 illustrates an adaptive comb filter, of the type shown in FIGURE 2, for processing the sampled video signal produced by ADC 12. In FIGURE 10 a total of three different ways for deriving a luminance signal Y and likewise three different ways of deriving a chrominance signal C, are shown. In each instance the signal paths are evaluated, as a function of the vertical components, to determine which path will provide the best expected signal separation. This is achieved in the following described manner according to the arrangement of FIGURE 10, in which the luminance signal Y2H and the chrominance signal C2H correspond to the signals Y and C respectively in FIGURE 2.

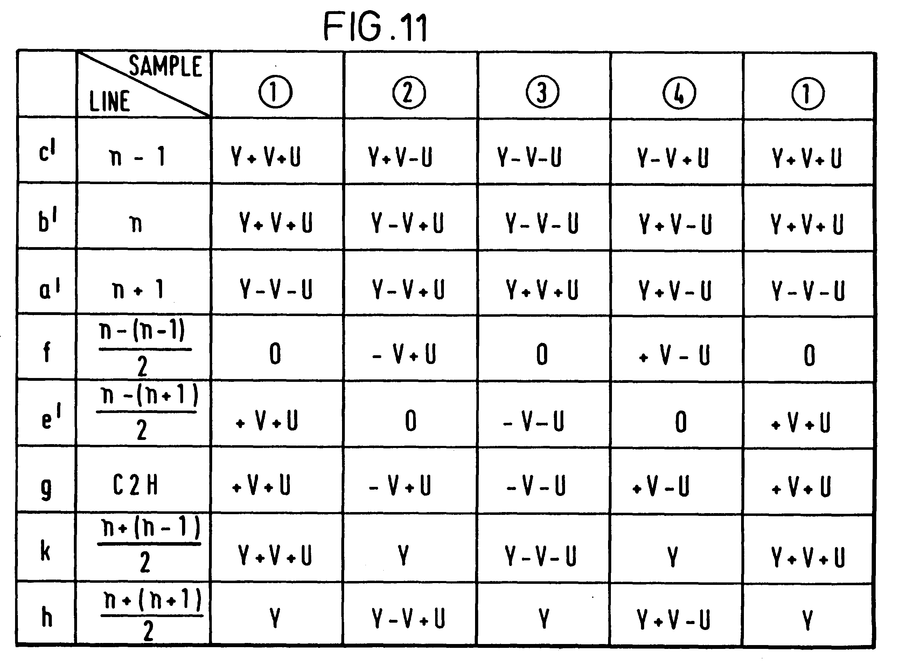

In FIGURE 10, the sampled and digitized input video signal from ADC 12 is provided to the input a′ of the series circuit of delay elements 1004 and 1005. At the center point b′ thereof the signal is delayed by one line and at the output point c′ the signal is delayed by two lines. Between the input point a′ and the center point b′ a subtraction stage 1006 is connected. Between the center point b′ and the output point c′ a subtraction stage 1007 is connected. The outputs of the subtraction stages 1006 and 1007 are applied to respective inputs of a change over switch 1008. The change over switch 1008 is controlled by a switching signal fsw related to the sampling rate and provides at the output d′ the extracted chrominance signal. The chrominance signal is provided via amplifier 1012, with an amplification factor of 0.5, to terminal 1009 where it is available as digital chrominance signal separated from the luminance signal. The chrominance signal at point g is also provided to one input of a subtraction stage 1010 whose second input is the combined signal from center point b′. At terminal 1011 there is obtained the difference between the combined signal and the chrominance signal, thus providing the digitized luminance signal separated from the chrominance signal. In addition, in FIGURE 10 at the points a′, b′, c′ the adder stages 1013 and 1014 are connected as shown. The adder stages 1013, 1014 provide respective signals h and k according to the table shown in FIGURE 11.

From FIGURE 11 it is evident that for each of the signals at the outputs h and k, during alternate sampling intervals, a pure luminance signal occurs. These signals h, k are supplied rspectively to interpolation filters 1015 and 1016. These filters, through division by two of the sampling rate, processes the alternate samples having the pure luminance signal and generate interstitial samples via interpolation. Thereby two additional luminance signals YD, YU are provided respectively responsive to the outputs h and k. Correspondingly the chrominance signals from outputs e′ and f are additionally supplied to two interpolation filters 1017, 1018 and are there converted in the same manner into two further chrominance signald CD and CU. It is evident that now three luminance signals, specifically Y2H, YD, YU and also three chrominance signals C2H, CD, CU are available which differ in their composition from lines n-1, n, and n+1. This means that these signals are dependent on the vertical components present in the picture which are the difference between signals of successive lines.

It is now determined, as a function of the presence of vertical components, which of the three luminance and chrominance signals available should be used in further signal processing, picture display or recording such that the best separation of luminance and chrominance information is provided. As criterion for the selection, the chrominance signals at the outputs e′, f of the subtraction stages 1006, 1007 are evaluated. These signals are supplied to two subsampler stages 1019, 1020. These subsampler stages effect through a division by two of the sampling rate, an evaluation of the signals only during the sampling intervals according to FIGURE 11, in which their amplitudes e′, f in the absence of vertical components are zero, thus for example with the chrominance signal at the output e′, during the sampling intervals 2 and 4. The amplitudes e′ and f are evaluated in the stages 1019, 1020 and through filtering and rectification converted into two voltages with the values A′ and B′. In the presence of vertical components the amplitudes A′ and B′ are not zero but rather increase corresponding to the amplitude of the vertical components. These voltages are supplied to comparator circuit 1021 and there compared with a threshold value S. As a function of this comparison at the output 1022 a setting value originates which effects a selection between the luminance signals and the chrominance signals at the outputs in FIGURE 10 in such a way that, for particular vertical components, an optimal separation takes place. This selection takes place according to the following rule:

| Result of case comparison | Output luminance | Output chrominance |
|---|---|---|
| 1. A' < S, B' < S | Y2H | C2H |
| 2. A' > S, A' > B' | YD | CD |
| 3. B' > S, B' > A | YU | CU |

According to case 1 the amplitudes A′ and B′ depending on the vertical components lie below the threshold value S. This means that in the signal no significant vertical components are present. Then the signals Y2H and C2H are used. If according to case 2, the amplitude A′ lies above the threshold value S and also above the amplitude B′, the signals YD and CD are used. Thus the signal from the output of the stage in which the amplitude A′ or B′ is large, is analogously switched over to the other stage. If according to case 3 the amplitude B′ lies above the threshold value S and above the amplitude A′, the signals YU and CU are correspondingly used. With low vertical components, thus small amplitudes A′ and B′, the circuit operates, with the signals CU, CD, YU, YD not being used.

Through the adaptation of the circuit to the vertical components present in each instance, a significantly better signal separation and an improved picture display is achieved.

While the description provided hereby with reference to the circuitry illustrated in FIGURES 2-11, has been primarily in terms of PAL video samples, it will be appreciated by those skilled in the art of video signal processing, that the concepts are equally applicable to NTSC video signals, and the claims should be considered in this light.

## Claims

1. Comb filter apparatus comprising:

   a signal input terminal (10) for providing an input for a composite color video signal; first means (24, 26) coupled to said signal input terminal for concurrently providing from said input signal signals from three successive horizontal lines designated top, middle and bottom;

   combining means (28, 32, 58, 60, 64) responsive to said signals from said top, middle and bottom lines for providing a combined signal in the form of a comb filtered signal which includes said signal from said middle line combined with said signals from said top or bottom lines,

   **characterized in that:**
   said combined signal is produced at regular moments during a line period, the time interval between two consecutive moments corresponding to a multiple of the color carrier frequency, in such an alternating manner that said signal from said middle line is combined at a said moment with said signal from said bottom line and at the next moment with said signal from said top line and so on.

2. Comb filter apparatus according claim 1
   **characterized by**
   sampling means (12 - 16) coupled to said signal input terminal (10) for sampling said composite color video signal at said rate equal to said multiple of said color carrier signal frequency with a phase shifted by 45 degrees relative to the axes of the quadrature modulated chrominance signals of said composite color video signal.

3. Comb filter apparatus according to claim 2
   **characterized in that**
   said combining means (58, 60, 64) comprise an additional output means (66) for producing with said combined signal (e.g. between said middle line and said bottom line) the alternate combined signal (e.g. between said middle line and said top line) which is representative of the presence of a vertical transition and controls a combining circuit (74) which combines said combined signal with a not comb filtered signal and produces therefrom an output signal in such a manner that in the event of an increasing magnitude of said vertical transition the proportion of said combined signal in said output signal is decreased and the proportion of said not comb filtered signal correspondingly increased.

4. Comb filter apparatus according to any of claims 1-3, wherein said composite color video signal is a PAL signal,
   **characterized by**
   additional means (16, 22) coupled to said signal input terminal for generating a PAL switch signal which inverts the overall sequence of said combined signals from line to line.

5. Comb filter apparatus according to claim 4,
   **characterized in that**
   said combining means comprise:

   first (58) and second (60) subtracter circuits having respective minuend input terminals coupled to said video signal samples from said middle line, and respective subtrahend input terminals coupled to receive said video signal samples from said bottom and top lines, respectively, each of said first and second subtracter circuits having an output terminal, a first multiplexer (64) having first and second input terminals coupled to the output terminals of said first (58) and second (60) subtracter circuits respectively, and a control input terminal and an output terminal for providing said combined comb filtered signal;
   a second multiplexer (66) having first and second input terminals coupled to the output terminals of said first (58) and second (60) subtracter circuits, respectively, and a control input terminal and an output terminal for providing said alternate combined signal, and that the control input terminals of both multiplexers (64 and 66) are supplied with a switching signal which switches said multiplexers in synchronism with said overall sequence occurring at said regular moments during a line period.

6. Comb filter apparatus according to claim 3
   **characterized by**
   means (510-526) coupled for receiving said alternate combined signal and outputting a signal value which is dependent on the difference between two of said alternate combined signals occurring at moments which have a time difference of two consecutive time intervals, said signal value controlling said combining circuit (74).

7. Comb filter apparatus according to claim 3,
   **characterized by**
   means (810-818) coupled for receiving said alternate combined signal and outputting a signal value which is dependent on the magnitude of the average between two of said alternate combined signals occurring at moments which have a time difference of two consecutive time intervals, said signal value controlling said combining circuit (74).

8. Comb filter apparatus according to claim 1,
   **characterized in that**
   said first means include a first sampled data delay line (24) for storing samples at a predetermined rate, and a second sampled data delay line (26) having half the storage capacity as said first sampled data delay line and operated at half said predetermined rate, said two delay lines (24 and 26) being connected in series with each other.

**Patentansprüche**

1. Kammfilteranordnung umfassend:

   einen Signal-Eingangsanschluß (10) zum Vorsehen eines Eingangs für ein zusammengesetztes Farb-Videosignal;
   erste, mit dem Signal-Eingangsanschluß verbundene Mittel (24, 26), um gleichzeitig von dem Eingangssignal Signale von drei aufeinanderfolgenden horizontalen Zeilen vorzusehen, die als obere, mittlere und untere Zeile bezeichnet sind;
   Kombinierungsmittel (28, 32, 58, 60, 64), die auf die Signale von der oberen, der mittleren und der unteren Zeile ansprechen, um ein kombiniertes Signal in Form eines kammgefilterten Signals vorzusehen, das das Signal von der mittleren Zeile kombiniert mit den Signalen von der oberen und unteren Zeile enthält, <u>dadurch gekennzeichnet,</u> daß:
   das kombinierte Signal in regelmäßigen Augenblicken während einer Zeilenperiode erzeugt wird, wobei das Zeitintervall zwischen zwei aufeinanderfolgenden Augenblicken einem Vielfachen der Farbträgerfrequenz entspricht, und wobei das kombinierte Signal in einer derart abwechselnden Weise erzeugt wird, daß das Signal von der mittleren Zeile in dem genannten Augenblick mit dem Signal von der unteren Zeile und in dem nächsten Augenblick mit dem Signal von der oberen Zeile kombiniert wird und so weiter.

2. Kammfilteranordnung nach Anspruch 1, <u>gekennzeichnet durch:</u>
   Abtastmittel (12 - 16), die mit dem Signal-Eingangsanschluß (10) verbunden sind, um das zusammengesetzte Farb-Videosignal mit der Rate gleich dem Vielfachen der Farbträger-Signalfrequenz mit einer um 45° relativ zu den Achsen der quadraturmodulierten Chrominanzsignale des zusammengesetzten Fernsehsignals verschobenen Phase abzutasten.

3. Kammfilteranordnung nach Anspruch 2, <u>dadurch gekennzeichnet</u>, daß die kombinierenden Mittel (58, 60, 64) zusätzliche Ausgangsmittel (66) umfassen, um mit dem kombinierten Signal (z.B. zwischen der mittleren Zeile und der unteren Zeile) das abwechselnde kombinierte Signal (zum Beispiel zwischen der mittleren Zeile und der oberen Zeile) zu erzeugen, das repräsentativ für das Vorhandensein eines vertikalen Übergangs ist und eine kombinierende Schaltung (74) steuert, die das kombinierte Signal mit einem nicht kammgefilterten Signal kombiniert und daraus ein Ausgangssignal derart erzeugt, daß im Falle einer zunehmenden Größe des vertikalen Übergangs der Anteil des kombinierten Signals in dem Ausgangssignal vermindert und der Anteil des nicht kammgefilterten Signals entsprechend vergrößert wird.

4. Kammfilteranordnung nach einem der Ansprüche 1 bis 3, bei der das zusammengesetzte Farb-Videosignal ein PAL-Signal ist, <u>gekennzeichnet durch:</u>
   zusätzliche Mittel (16, 22), die mit dem Signal-Eingangsanschluß verbunden sind, um ein PAL-Schaltsignal zu erzeugen, das die Gesamtsequenz des kombinierten Signals von Zeile zu Zeile umkehrt.

5. Kammfilteranordnung nach Anspruch 4, <u>dadurch gekennzeichnet,</u> daß:

   die kombinierenden Mittel umfassen:
   eine erste (58) und eine zweite (60) Subtraktionsschaltung mit entsprechenden Minuend-Eingangsanschlüssen, denen die Videosignal-Abtastungen von der mittleren Zeile zugeführt werden und mit entsprechenden Subtrahend-Eingangsanschlüssen zum Empfang der Videosignal-Abtastungen von der unteren bzw. der oberen Zeile, wobei jede der beiden Subtraktionsschaltungen einen Ausgangsanschluß hat;
   einen ersten Multiplexer (64) mit einem ersten und einem zweiten Eingangsanschluß, wobei die Eingangsanschlüsse mit den Ausgangsanschlüssen der ersten (58) bzw. zweiten (60) Subtraktionsschaltung verbunden sind, und mit einem Steuer-Eingangsanschluß und einem Ausgangsanschluß zur Lieferung des kombinierten kammgefilterten Signals;
   einen zweiten Multiplexer (66) mit einem ersten und einem zweiten Eingangsanschluß, wobei die Eingangsanschlüsse mit den Ausgangsanschlüssen der ersten (58) bzw. zweiten (60) Subtraktionsschaltung verbunden sind, und mit einer Steuer-Eingangsanschluß und einem Ausgangsanschluß zur Lieferung des abwechselnden kombinierten Signals, und wobei die Steuer-Eingangsanschlüsse der beiden Multiplexer (64 und 66) mit einem Schaltsignal versorgt werden, das die Multiplexer synchron mit der Gesamtsequenz schaltet, die in den regelmäßigen Augenblicken während einer Zeilenperiode auftreten.

6. Kammfilteranordnung nach Anspruch 3, <u>gekennzeichnet durch:</u>

Mittel (510 - 526) zum Empfang des abwechselnden kombinierten Signals und zur Ausgabe eines Signalwerts, der von dem Unterschied zwischen zwei der abwechselnden kombinierten Signale abhängt, die in Augenblicken auftreten, die einen Zeitunterschied von zwei aufeinanderfolgenden Zeitintervallen haben, wobei der Signalwert die kombinierende Schaltung (74) steuert.

7.  Kammfilteranordnung nach Anspruch 3, <u>gekennzeichnet durch:</u>
    Mittel (810 - 818) zum Empfang des abwechselnden kombinierten Signals und zur Ausgabe eines Signalwertes, der von der Größe des Durchschnitts zwischen zwei der abwechselnden kombinierten Signale abhängt, die in Aubenblicken auftreten, die einen Zeitunterschied von zwei aufeinanderfolgenden Zeitintervallen haben, wobei der Signalwert die kombinierende Schaltung steuert.

8.  Kammfilteranordnung nach Anspruch 1, <u>dadurch gekennzeichnet,</u> daß die ersten Mittel eine erste abgetastete Datenverzögerungsleitung (24) zum Speichern von Abtastungen mit einer vorgegebenen Rate und eine zweite abgetastete Datenverzögerungsleitung (26) umfassen, die die halbe Speicherkapazität wie die erste abgetastete Datenverzögerungsleitung hat und mit der halben vorgegebenen Rate arbeitet, und daß die beiden Verzögerungsleitungen (24 und 26) miteinander in Reihe geschaltet sind.


**Revendications**

1.  Appareillage à filtre en peigne comprenant:

    une borne d'entrée de signal (10) pour fournir une entrée pour un signal vidéo couleur composite; des premiers moyens (24, 26) couplés à ladite borne d'entrée de signal pour fournir simultanément à partir dudit signal d'entrée des signaux en provenance de trois lignes horizontales successives désignées supérieure, médiane et inférieure;
    des moyens de combinaison (28, 32, 58, 60, 64), sensibles auxdits signaux desdites lignes supérieure, médiane et inférieure pour fournir un signal combiné sous la forme d'un signal filtré en peigne qui inclut ledit signal de ladite ligne médiane combinée avec lesdits signaux desdites lignes inférieure ou supérieure,

    caractérisé en ce que
    ledit signal combiné est produit à des moments réguliers pendant une période de ligne, l'intervalle de temps entre deux moments consécutifs correspondant à un multiple de la fréquence de porteuse couleur, d'une manière alternante telle que ledit signal de ladite ligne médiane soit combiné à undit moment avec ledit signal de ladite ligne inférieure et au moment suivant avec ledit signal de ladite ligne supérieure et ainsi de suite.

2.  Appareillage à filtre en peigne selon la revendication 1,
    caractérisé par
    des moyens d'échantillonnage (12 - 16) couplés à ladite borne d'entrée de signal (10) pour l'échantillonnage dudit signal vidéo couleur composite à ladite vitesse égale audit multiple de la fréquence de signal de porteuse couleur, avec une phase décalée de 45 degrés par rapport aux axes des signaux de chrominance modulés en quadrature dudit signal vidéo couleur composite.

3.  Appareillage à filtre en peigne selon la revendication 2
    caractérisé en ce que
    lesdits moyens de combinaison (58, 60, 64) comprennent un moyen supplémentaire de sortie (66) pour la production avec ledit signal combiné (par exemple entre ladite ligne médiane et ladite ligne inférieure) du signal combiné alternant (par exemple entre ladite ligne médiane et ladite ligne supérieure), qui est représentatif de la présence d'une transition verticale et qui contrôle un circuit de combinaison (74) qui combine ledit signal combiné avec un signal non filtré en peigne et qui produit à partir de là un signal de sortie d'une manière telle que, dans le cas d'une amplitude croissante de ladite transition verticale, la proportion dudit signal combiné dans ledit signal de sortie est diminué et que la proportion dudit signal non filtré en peigne est augmentée de manière correspondante.

4.  Appareillage à filtre en peigne selon l'une quelconque des revendications 1-3, dans lequel le signal vidéo couleur composite est un signal PAL,
    caractérisé par
    des moyens supplémentaires (16, 22) couplés à ladite borne d'entrée de signal en vue de la génération d'un signal de commutation PAL qui inverse la séquence globale desdits signaux combinés de ligne en ligne.

5. Appareillage à filtre en peigne selon la revendication 4,
   caractérisé en ce que

   lesdits moyens de combinaison comprennent:
   un premier (58) et un deuxième (60) circuits de soustracteur ayant des bornes d'entrée minuend respectives couplées audits échantillons de signal vidéo de ladite line médiane, et des bornes d'entrée subtrahend respectives couplées pour recevoir lesdits échantillons de signal vidéo desdites lignes inférieure et supérieure respectivement, chacun desdits premier et deuxième circuits de soustracteur ayant une borne de sortie, un premier multiplexeur (64) ayant des première et deuxième bornes d'entrée couplées aux bornes de sortie dudit premier (58) et deuxième (60) circuits de soustracteur respectivement, et une borne d'entrée de contrôle et une borne de sortie pour fournir ledit signal filtré en peigne combiné;
   un deuxième multiplexeur (66) ayant une première et une deuxième bornes d'entrée couplées aux bornes de sortie dudit premier (58) et deuxième (60) circuits de soustracteur, respectivement, et une borne d'entrée de contrôle et une borne de sortie pour fournir ledit signal combiné alternant, et en ce que l'on fournisse aux bornes d'entrée de contrôle des deux multiplexeurs (64 et 66) un signal de commutation qui commute lesdits multiplexeurs en synchronisme avec ladite séquence globale se produisant auxdits moments réguliers pendant une période de ligne.

6. Appareillage à filtre en peigne selon la revendication 3,
   caractérisé par
   des moyens (510-526) couplés pour la réception dudit signal combiné alternant et pour l'émission d'une valeur de signal qui est dépendante de la différence entre deux desdits signaux combinés alternants se produisant à des instants qui ont une différence de temps de deux intervalles de temps consécutifs, ladite valeur de signal contrôlant ledit circuit de combinaison (74).

7. Appareillage à filtre en peigne selon la revendication 3,
   caractérisé par
   des moyens (810-818) couplés pour la réception dudit signal combiné alternant et pour l'émission d'une valeur de signal qui est dépendante de l'amplitude de la moyenne entre deux desdits signaux combinés alternants se produisant à des instants qui ont une différence de temps de deux intervalles de temps consécutifs, ladite valeur de signal contrôlant ledit circuit de combinaison (74).

8. Appareillage à filtre en peigne selon la revendication 1,
   caractérisé en ce que
   lesdits premiers moyens incluent une première ligne de retard de données échantillonnées (24) pour le stockage d'échantillons à une vitesse prédéterminée, et une deuxième ligne de retard de données échantillonnées (26) ayant la moitié de la capacité de stockage de ladite première ligne de retard de données échantillonnées et fonctionnant à la moitié de ladite vitesse prédéterminée, lesdites deux lignes de retard (24 et 26) étant connectées en série l'une à l'autre.

line

| | | | | | | |
|---|---|---|---|---|---|---|
| N−2 | +Q | −I | −Q | +I | +Q | −I |
| N−1 | −Q | +I | +Q | −I | −Q | +I |
| N | +Q | −I | −Q | +I | +Q | −I |
| N+1 | −Q | +I | +Q | −I | −Q | +I |
| N+2 | +Q | −I | −Q | +I | +Q | −I |

FIG. 1A

line

| | | | | | | |
|---|---|---|---|---|---|---|
| N−2 | −U | −V | U | V | −U | −V |
| N−1 | V | U | −V | −U | V | U |
| N | U | V | −U | −V | U | V |
| N+1 | −V | −U | V | U | −V | −U |
| N+2 | −U | −V | U | V | −U | −V |

FIG. 1B

line

| | | | | | |
|---|---|---|---|---|---|
| N−2 | −(V+U) | −(V−U) | (V+U) | (V−U) | −(V+U) |
| | a | b | c | d | e |
| N−1 | (V+U) | −(V−U) | −(V+U) | (V−U) | (V+U) |
| | l | m | n | o | p |
| N | (V+U) | (V−U) | −(V+U) | −(V−U) | (V+U) |
| | s | t | u | v | w |
| N+1 | −(V+U) | (V−U) | (V+U) | −(V−U) | −(V+U) |
| N+2 | −(V+U) | −(V−U) | (V+U) | (V−U) | −(V+U) |

FIG. 1C

time

FIG. 2

Y
C
34
26
1H
BPF 30
I2
32
I1
28
24
1H
22
XOR
20
÷ 2
4fsc
12
ADC
16
PLL &
PAL SWITCH
GEN
45°
SHIFT
18
PAL
SWITCH
VIDEO IN
10
14
SYNC &
BURST
GATE
B6

14

FIG. 3

FIG. 4

FIG. 5

FIG. 6

FROM
MUX 66

FIG. 7

MAGITUDE → $t_p$ → $t_p$

MAX

÷ → K ROM

+

MAGITUDE

DIFFERENCE

$t_p$ → $t_p$

K VARIABLE

FROM
MUX 66

810
MAGNITUDE

812
$t_p$

814
$t_p$

FIG. 8

AVERAGE

816

ADD
K ROM

K VARIABLE

818

17

FIG. 9

FIG.10

## FIG.11

| SAMPLE / LINE | ① | ② | ③ | ④ | ① |
|---|---|---|---|---|---|
| $c'$ — $n-1$ | Y+V+U | Y+V-U | Y-V-U | Y-V+U | Y+V+U |
| $b'$ — $n$ | Y+V+U | Y-V+U | Y-V-U | Y+V-U | Y+V+U |
| $a'$ — $n+1$ | Y-V-U | Y-V+U | Y+V+U | Y+V-U | Y-V-U |
| $f$ — $\dfrac{n-(n-1)}{2}$ | 0 | -V+U | 0 | +V-U | 0 |
| $e'$ — $\dfrac{n-(n+1)}{2}$ | +V+U | 0 | -V-U | 0 | +V+U |
| $g$ — C2H | +V+U | -V+U | -V-U | +V-U | +V+U |
| $k$ — $\dfrac{n+(n-1)}{2}$ | Y+V+U | Y | Y-V-U | Y | Y+V+U |
| $h$ — $\dfrac{n+(n+1)}{2}$ | Y | Y-V+U | Y | Y+V-U | Y |